# EUROPÄISCHE PATENTANMELDUNG

(11) **EP 2 807 990 A2**
(43) Veröffentlichungstag der Anmeldung: **03.12.2014**
(21) Anmeldenummer: 14170816.4
(22) Anmeldetag: 02.06.2014
(51) Int. Cl.: A61C 13/00, A61C 13/12

(54) **Adapter zur Ausbildung einer Rohlingsanordnung zur Herstellung von Zahnersatz sowie Rohlingsanordnung**

(30) Priorität: 31.05.2013 DE 102013210203
(71) Anmelder: Ellerbrock, Christof, 55218 Ingelheim (DE)
(72) Erfinder: Ellerbrock, Christof, 55218 Ingelheim (DE)
(74) Vertreter: Gulde & Partner

(57) **Zusammenfassung**

Um einen Adapter zur Ausbildung einer Rohlingsanordnung zur Herstellung von Zahnersatz sowie eine Rohlingsanordnung, die in eine Aufnahme einer spanabhebenden Vorrichtung reversibel einbringbar ist, bereitzustellen wird vorgeschlagen, dass der Adapter (10) einen scheibenförmigen Grundkörper besitzt, durch den mittig eine Durchgangsöffnung (11) mit zumindest jeweils zwei einander gegenüberliegenden Seiten führt, und dass an zumindest zwei einander gegenüberliegenden Seiten der Durchgangsöffnung Mittel zur reversiblen Fixierung eines auf einem plattenförmigen Halter (26) festgelegten Rohlings (25) oder eines mit plattenförmigen Haltelementen versehenen Rohlings angeordnet sind, und dass die Rohlingsanordnung (28) einen Adapter (10) einen auf einem platenförmigen Halter (26) festgelegten Rohling (25) oder einen mit Haltelementen versehenen Rohling (25) aufweist, wobei der Halter (26) bzw. die Haltelemente im Bereich der Durchgangsöffnung (11) durch die Mittel zur Fixierung festgelegt ist bzw. sind.

## Beschreibung

Die vorliegende Erfindung betrifft einen Adapter zur Ausbildung einer Rohlingsanordnung zur Herstellung von Zahnersatz, sowie eine Rohlingsanordnung.

### Stand der Technik

Im Dentalbereich werden keramische Werkstoffe als prothetische Bauteile beispielsweise als Zahnersatz genutzt, da sich diese durch eine hohe mechanische Belastbarkeit, eine sehr geringe Wärmedehnung sowie durch eine ausgeprägte Abriebfestigkeit auszeichnen. Zudem sind keramische Werkstoffe aufgrund eines geringen Ionenaustausches gut bioverträglich. Hierfür eignen sich insbesondere keramische Werkstoffe aus Zirkonoxid (ZrO₂), das eine sehr hohe Härte aufweist. Daneben werden aber auch weiterhin bewährte Materialien aus Metall oder Kunststoff eingesetzt.

Bei der Verarbeitung von Keramikmaterialen und anderen Materialien für prothetische Zwecke wird normalerweise ein Rohling verwendet, der anschließend mittels einer Vorrichtung spanabhebend in eine gewünschte Endform gebracht wird. Diese Rohlinge, die üblicherweise als Quader, Scheibe aber auch in verschiedenen Sonderformen vorliegen, werden als Blanks, solche in Scheibenform auch als Ronde bezeichnet.

Diese Rohlinge werden von den jeweiligen Anbietern üblicherweise maschinenspezifisch angeboten, d.h. die Aufnahme der Vorrichtung für den Rohling und der Rohling oder ein Halter, der üblicherweise fest mit dem Rohling verbunden ist, sind korrespondierend ausgestaltet. Hingegen hat sich bei den Blanks (Ronden) in Scheibenform mittlerweile ein Standard in Bezug auf Durchmesser (98,5 mm) und Dicke (bis zu 28 mm) etabliert, so dass diese in Bearbeitungsmaschinen verschiedener Hersteller einsetzbar sind.

Es liegt der Erfindung die Aufgabe zugrunde, einen Adapter zur Ausbildung einer Rohlingsanordnung sowie eine Rohlingsanordnung bereitzustellen, der bzw. die eine Bearbeitung eines beliebigen Rohlings mittels einer Bearbeitungsmaschine ermöglicht.

Diese Aufgabe wird erfindungsgemäß durch einen Adapter mit den Merkmalen des Anspruchs 1 bzw. eine Rohlingsanordnung mit den Merkmalen des Anspruchs 12 gelöst.

Vorteilhafte Ausgestaltungen der Erfindung sind in den Unteransprüchen gekennzeichnet.

Erfindungsgemäß wird ein Adapter zur Ausbildung einer Rohlingsanordnung zur Herstellung von Zahnersatz bereit gestellt, die über Mittel zur Aufnahme in einer spanabhebenden Vorrichtung verfügt , wobei der Adapter einen scheibenförmigen, d.h. runden Grundkörper besitzt, durch den mittig eine Durchgangsöffnung geführt ist. Die Einbringung der Rohlingsanordnung in eine Vorrichtung ist dabei reversibel.

Gegenstand der Erfindung ist daher auch die Verwendung eines erfindungsgemäßen Adapters zur Ausbildung einer Rohlingsanordnung zur Herstellung von Zahnersatz.

In der Durchgangsöffnung sind seitlich Mittel zur reversiblen Fixierung eines einen plattenförmigen Halter aufweisenden Rohlings oder eines mit plattenförmigen Haltelementen versehenen Rohlings angeordnet.

Die Fixierung des Rohlings in Relation zum Adapter erfolgt dabei mittelbar über den Halter.

Vorzugsweise ist die Durchgangsöffnung des Adapters in zwei parallel zu beiden Seiten des scheibenförmigen Grundkörpers angeordnete

Abschnitte mit unterschiedlichen Querschnitten unterteilt, wobei der erste Abschnitt eine größere, vorzugsweise runde Querschnittsfläche aufweist als der zweite Abschnitt, so dass ein in der Durchgangsöffnung umlaufender Absatz ausgebildet ist. Dieser Absatz dient vorzugsweise zur Auflage eines Halters oder von Halteelementen eines Rohlings und zur Anordnung der Mittel zur Fixierung.

Die Mittel zur Fixierung bestehen vorzugsweise jeweils aus einer Aufschraubplatte, die mittels zumindest einer Schaube reversibel, vorzugsweise auf dem Absatz in der Durchgangsöffnung festlegbar sind. Entsprechende Bohrungen mit Innengewinde zur Aufnahme der mindestens einen Schraube sind in den Absatz eingebracht.

Nach einer bevorzugten Ausführungsform weist die Aufschraubplatte zudem zusätzlich zumindest eine, vorzugsweise zwei Durchgangsbohrungen auf, die mit Führungsstiften, die im Absatz der Durchgangsöffnung angeordnet sind, korrespondieren und eine schnelle und exakte Montage eines erfindungsgemäßen Adapters mit einem Rohling zu einer Rohlingsanordnung ermöglichen.

Die Aufschraubplatten können eine nahezu beliebige Form aufweise, da diese nur geeignet sein müssen, den Halter oder die Halteelemente klemmend zu halten. Vorzugsweise ragen diese nicht über den Absatz zwischen beiden Abschnitten der Durchgangsöffnung hinaus, d.h. die Fläche der Durchgangsöffnung wird durch die Aufschraubplatten nicht verringert. Um eine größtmögliche Autlagefiläche der Mittel zur Fixierung zu erhalten, erstreckt sich die Aufschraubplatte vollständig über den Absatz. Je nach Ausgestaltung der Durchgangsöffnungen können sich dabei unterschiedliche Formen ergeben. Bevorzugt weist die Anschraubplatte eine kreissegmentförmige Ausgestaltung auf.

Die Durchgangsöffnung und deren Abschnitte sind in der einfachsten Ausgestaltung rund ausgestaltet, bevorzugt wird jedoch dass die Durchgangsöffnung im Bereich des Abschnitt mit der geringeren Fläche eine Form aufweist, bei der zwei einander parallel gegenüberliegende Seiten gegeben sind, vorzugsweise in Form eines Vierecks, eines Sechsecks oder eines Achtecks.

Die Mittel zur Fixierung sind bei vorgenannten Ausführungsformen vorzugsweise in der Durchgangsöffnung gegenüberliegend, vorzugsweise an parallelen Seiten vorgesehen, jedoch sind auch andere Ausführungsformen mit drei oder vier Mitteln zur Fixierung, die vorzugsweise über den Umfang der Durchgangsöffnung verteilt sind, vorteilhafterweise einsetzbar.

Bei den Ausführungsformen des Adapters mit einer eckigen Durchgangsöffnung in einem Abschnitt, können die zur Durchgangsöffnung weisenden Seitenflächen der vorzugsweise kreissegmentförmigen Aufschraubplatten vorteilhafterweise als Führungsflächen für einen Rohling dienen.

Bei Auflage eines Halters oder von Haltelementen auf dem Absatz ist bzw. sind nach einer Ausführungsform der Erfindung die Mittel zur Fixierung derart angeordnet, dass der Halter oder die Haltelemente zwischen dem Absatz und den Mitteln zur Fixierung eingespannt sind.

Die Aufschraubplatten weisen nach einer bevorzugten Ausführungsform Auskragungen auf, die sich an den Enden der Aufschraubplatten oberhalb des Absatzes erstrecken und die einen Halter oder Haltelemente des Rohlings übergreifen können. Vorzugsweise wird bzw. werden dabei zur Ausbildung einer Rohlingsanordnung ein Halter oder Haltelemente verwendet, die im Bereich der Aufschraubplatten eine Ausnehmung aufweisen, so dass die Aufschraubplatten direkt auf dem Absatz aufliegen und der Rohling bzw. der Halter oder die Halteelemente durch die Auskragungen, die diese überspannen, gehalten werden. Hierbei ergibt sich vorteilhafterweise eine besonders verdrehsichere Verbindung zwischen Rohling und Adapter.

Vorzugsweise weist der Adapter eine räumlich ausgebildete Zentrierungsmarkierung auf, um stets eine eindeutige Zuordnung der Position des Rohlings in Relation zum Adapter zu ermöglichen.

Der erfindungsgemäße Adapter weist zur Halterung in einer Aufnahme einer spanabhebenden Vorrichtung eine Wirkfläche auf, die durch die umlaufende Seitenfläche gebildet ist. Diese Seitenfläche kann zusätzlich räumlich in Abhängigkeit der Aufnahme der Vorrichtung ausgeformt sein. Zur Ausbildung einer erfindungsgemäßen Rohlingsanordnung wird in den Adapter ein Rohling eingebracht, der mit angeklebten Halteelementen bzw. einem plattenförmigen Halter versehen ist, wobei der plattenförmige Halter vorzugsweise rund oder eckig ausgestaltet ist.

Sofern die Halteelemente bzw. der Halter größer sind als der freie Innenbereich der Durchgangsöffnung des erfindungsgemäßen Adapters, ist es notwendig diese Halter oder Halteelemente zu kürzen bzw. die Ecken abzutrennen, um diese in der Durchgangsöffnung Adapters einbringen zu können, wobei darauf zu achten ist, dass die gekürzten Halter oder Halteelemente gegebenenfalls auf dem Absatz aufliegen.

Der Halter oder die Haltelemente können zudem vorzugsweise mit zumindest einer Ausnehmung versehen werden, die mit den Aufschraubplatten zu korrespondieren, die seitliche Auskragungen besitzen.

Erfindungsgemäß besonders günstig ist es, dass der Rohling auf dem Halter oder mit den Halteelementen kraftschlüssig verbunden ist. Vorzugsweise ist dazu der Rohling mit dem Halter oder den Haltelementen verklebt, verschweißt oder dergleichen.

Die Form des Rohlings ist frei wählbar, wobei eine kubische Form verbreitet ist.

Vorteilhafterweise wird durch den erfindungsgemäßen Adapter bzw. die Rohlingsanordnung eine Verbindung zwischen Adapter und Halter bereitgestellt, die drehfest und momentensicher ist, also sowohl Scherkräften als auch Drehkräften, die bei der Bearbeitung durch die spanabhebenden Vorrichtung in die Rohlinge eingeleitet werden können, widerstehen.

Vorteilhafterweise wird durch den Adapter eine Rohlingsanordnung bereit gestellt, die den gleichen Durchmesser und eine Dicke aufweist wie standardisierte Ronden, d.h. durch eine identische Außengestaltung können gerätespezifische Blanks in beliebigen für Ronden geeigneten Vorrichtungen bearbeitet werden.

Vorzugsweise weist der Adapter eine Wirkfläche als Mittel zur Aufnahme in einer Bearbeitungsvorrichtung auf, die durch die umlaufende Seitenfläche gebildet ist. Diese Wirkfläche besitzt vorzugsweise einen umlaufenden Ring,

Die Ausführungen hinsichtlich des Adapters und der Rohlingsanordnung betreffen gelten sinngemäß auch jeweils den anderen Erfindungsgegenstand.

Vorteilhafte Weiterbildungen der Erfindung sind in den Unteransprüchen angegeben und in der Beschreibung beschrieben.

### Zeichnungen

Ausführungsbeispiele der Erfindung werden anhand der Zeichnungen und der nachfolgenden Beschreibung näher erläutert. Es zeigen:
- Fig. 1: in einer perspektivischen Ansicht ein erfindungsgemäßer Adapter,
- Fig. 2: in einer perspektivischen Ansicht von der anderen Seite der erfindungsgemäße Adapter,
- Fig. 3: in einer perspektivischen Ansicht zwei Aufschraubplatten des Adapters,
- Fig. 4: in einer perspektivischen Ansicht ein auf einem Halter angeordneter Rohling,
- Fig. 5: in einer Ansicht von oben ein mit einem Halter versehener Rohling, und
- Fig. 6: in einer Ansicht von oben eine erfindungsgemäße Rahüngsanordnung.

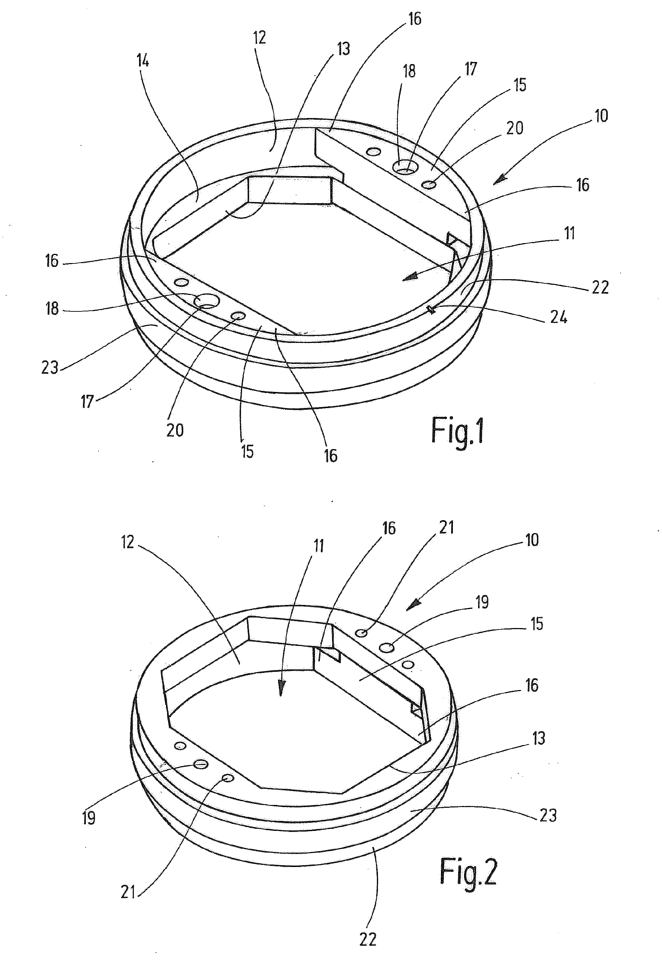

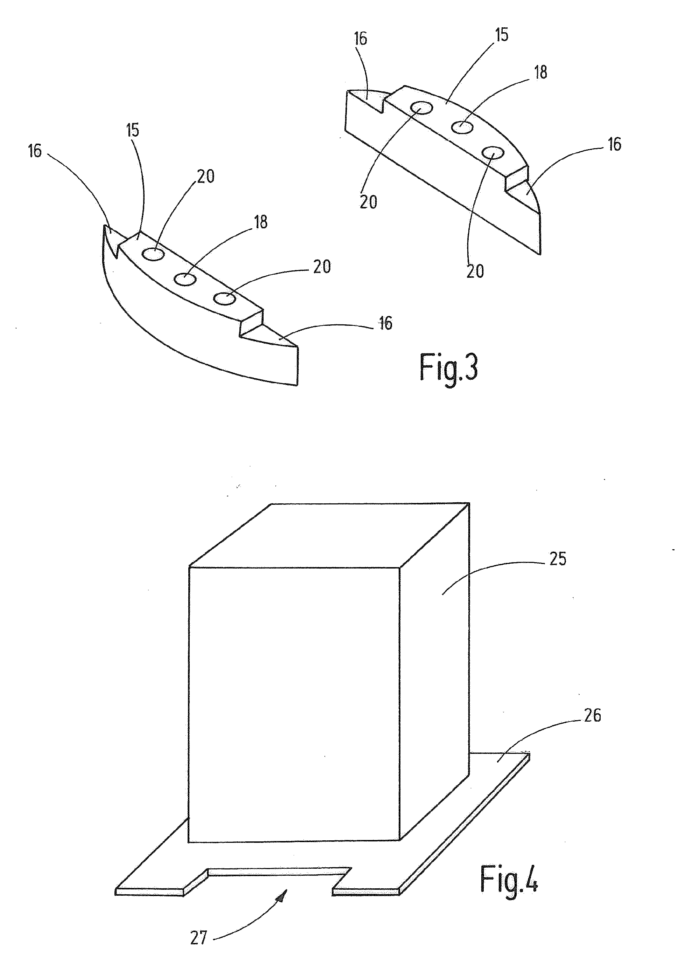

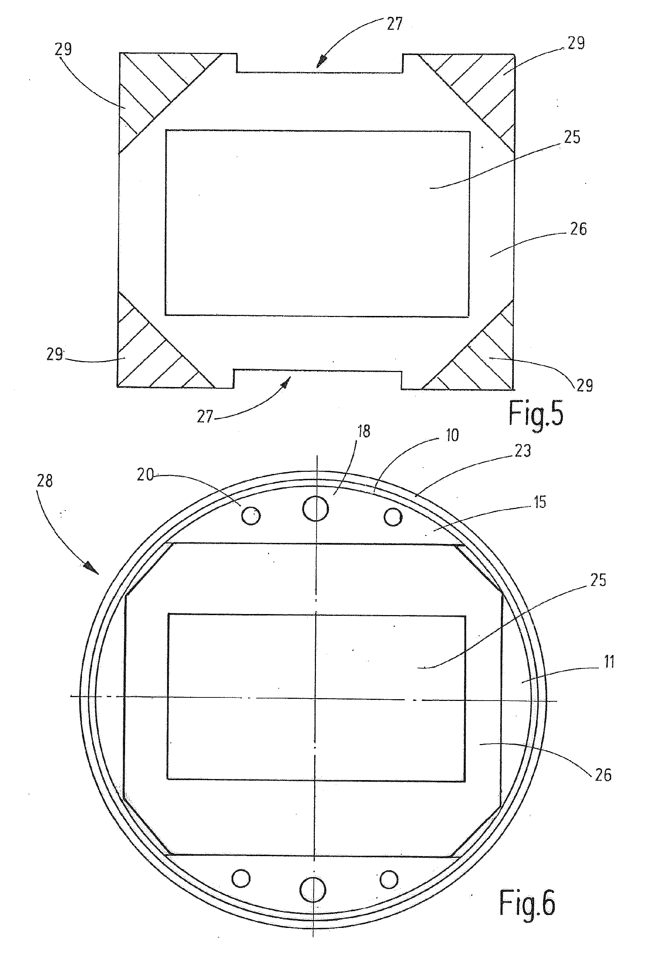

Der in Figur 1 und 2 dargestellte Adapter 10 weist eine scheibenförmige Grundform auf, wobei mittig durch den Adapter eine Durchgangsöffnung 11 geführt ist. Die Durchgangsöffnung 11 des Adapters 10 ist in zwei parallel zu beiden Seiten des scheibenförmigen Grundkörpers angeordnete Abschnitte 12, 13 mit unterschiedlichen Querschnitten unterteilt. Der Querschnitt des einen Abschnitts 12 der Durchgangsöffnung 11 ist rund ausgestaltet, während der Querschnitt des anderen Abschnitts 13 einen oktogonalen Querschnitt aufweist, wobei zwischen beiden Abschnitten 12, 13 ein in der Durchgangsöffnung 11 umlaufender Absatz 14 ausgebildet ist. Auf dem Absatz 14, einander gegenüberliegend sind zwei Aufschraubplatten 15 angeordnet, die kreissegmentförmig gestaltet sind. Die zur Durchgangsöffnung 11 weisenden Seiten der Aufschraubplatten 15 fluchten jeweils mit einer Seite des Abschnitts 13 mit dem oktogonalen Querschnitt. Die beiden Enden 16 der Aufschraubplatten 15 sind als Auskragung ausgeformt und sind daher vom Absatz 14 beabstandet. Die Aufschraubplatten sind mittels einer Schaube 17 reversibel auf dem Absatz 14 in der Durchgangsöffnung 11 festgelegt. Dazu weist die Aufschraubplatte 15 eine Bohrungen 18 auf, die mit einer Bohrung 19 im Absatz 14 korrespondiert. Zudem weisen die Aufschraubplatten 15 zusätzlich zwei Durchgangsbohrungen 20 auf, die mit Führungsstiften, die hier nicht sichtbar sind und die in Bohrungen 21 des Absatzes 14 verankert sind, korrespondieren.Der Adapter 10 weist zur Halterung in einer Aufnahme einer hier nicht dargestellten spanabhebenden Vorrichtung eine Wirkfläche 22 auf, die durch die umlaufende Seitenfläche gebildet ist. Diese Wirkfläche 22 besitzt zusätzlich einen umlaufenden Ring 23, der durch die Aufnahme der nicht dargestellten Vorrichtung bedingt ist. Zudem besitzt der Adapter eine Zentrierungsmarkierung 24. In Figur 3 sind die Aufsahraubialatten 15 detailliert dargestellt. Die Bezugszeichen entsprechen denen in den Figuren 1 und 2. Figur 4 und zeigen einen kubischen Rohling 25, der auf einem plattenförmigen Halter 26 angeordnet ist. Der Halter 26 besitzt eine rechteckige Form, und besitzt an zwei einander gegenüberliegenden Seiten eine Ausnehmung 27, die mit dem Bereich der Aufschraubplatten 15 korrespondieren der direkt auf dem Absatz 14 aufliegt. Um eine Rohlingsanordnung 28, wie in Figur 6 dargestellt auszubilden, werden schraffiert dargestellten Ecken 29 des Halters 26 abgetrennt. Anschließend kann der Halter 26 mit dem Rohling 25 in den Adapter 10 eingelegt und mittels der Anschraubplatten 15 fixiert werden. Die Bezugszeichen der Rohlingsanordnung 28 entsprechen den Bezugszeichen in den Figuren 1 bis 5.

### Bezugszeichenliste

- Adapter: 10
- Durchgangsöffnung: 11
- Abschnitt: 12, 13
- Absatz: 14
- Aufschraubplatte: 15
- Ende der Aufschraubplatte: 16
- Schaube: 17
- Bohrungen in der Aufschraubplatte: 18
- Bohrung im Absatz: 19
- Durchgangsbohrung: 20
- Bohrungen im Absatz: 21
- Wirkfläche: 22
- Ring: 23
- Zentrierungsmarkierung: 24
- Rohling: 25
- Halter: 26
- Ausnehmung: 27
- Rohlingsanordnung: 28
- Ecke: 29

## Patentansprüche

1. Adapter zur Ausbildung einer Rohlingsanordnung (28) zur Herstellung von Zahnersatz, **dadurch gekennzeichnet, dass** der Adapter (10) einen scheibenförmigen Grundkörper besitzt, durch den mittig eine Durchgangsöffnung (11) mit zumindest jeweils zwei einander gegenüberliegenden Seiten führt, und dass an zumindest zwei einander gegenüberliegenden Seiten der Durchgangsöffnung Mittel zur reversiblen Fixierung eines auf einem plattenförmigen Halter (26) festgelegten Rohlings (25) oder eines mit plattenförmigen Haltelementen versehenen Rohlings angeordnet sind.

2. Adapter nach Anspruch 1, **dadurch gekennzeichnet, dass** die Durchgangsöffnung (11) in zwei parallel zu beiden Seiten des scheibenförmigen Grundkörpers angeordnete Abschnitte (12, 13) mit unterschiedlichen Querschnitten unterteilt ist, wobei der erste Abschnitt (12) eine größere Querschnittsfläche aufweist als der zweite Abschnitt (13), so dass ein Absatz (14) ausgebildet ist.

3. Adapter nach Anspruch 2, **dadurch gekennzeichnet, dass** die Durchgangsöffnung im Bereich des einen Abschnitts (13) zwei einander parallel gegenüberliegende Seiten aufweist.

4. Adapter nach Anspruch 2 oder 3, **dadurch gekennzeichnet, dass** auf dem Absatz (14) die Mittel zur Fixierung angeordnet sind, mittels der der Halter (26) des Rohlings (25) klemmend fixierbar ist.

5. Adapter nach einem der Ansprüche 1 bis 4, **dadurch gekennzeichnet**, das die Mittel zur Fixierung jeweils aus einer Aufschraubplatte (15), die mittels zumindest einer Schaube (17) in der Durchgangsöffnung (11) reversibel festlegbar sind, bestehen.

6. Adapter nach Anspruch 5, **dadurch gekennzeichnet, dass** Aufschraubplatten (15) zumindest eine, vorzugsweise zwei Durchgangsbohrungen (20) aufweist, die mit Führungsstiften, die im Bereich der Durchgangsöffnung (11) angeordnet sind, korrespondieren.

7. Adapter nach einem der Ansprüche 2 bis 6, **dadurch gekennzeichnet, dass** die Durchgangsöffnung (11) und deren Abschnitte (12, 13) rund ist oder dass die Durchgangsöffnung (11) im Bereich des Abschnitt (13) mit der geringeren Fläche eine Form aufweist, bei der zwei einander parallel gegenüberliegende Seiten gegeben sind.

8. Adapter nach einem der Ansprüche 5 bis 7, **dadurch gekennzeichnet, dass** die Aufschraubplatten (15) an den Enden (16) Auskragungen aufweisen, die sich oberhalb des Absatzes (14) erstrecken und die einen Halter (26) des Rohlings (25) übergreifen.

9. Adapter nach einem der Ansprüche 1 bis 7, **dadurch gekennzeichnet, dass** der Adapter (10) eine räumlich ausgebildete Zentrierungsmarkierung (24) aufweist.

10. Adapter nach einem der Ansprüche 1 bis 7, **dadurch gekennzeichnet dass** der Adapter (10) zur Halterung in der Aufnahme einer spanabhebenden Vorrichtung eine Wirkfläche (22) aufweist.

11. Adapter nach Anspruch 10, **dadurch gekennzeichnet dass** die Wirkfläche (22) durch die umlaufende Seitenfläche des Grundkörpers ausgebildet ist.

12. Rohlingsanordnung einen Adapter (10) nach einem der Ansprüche 1 bis 11 sowie einen auf einem plattenförmigen Halter (26) festgelegten Rohling (25) oder einen mit Halteelementen versehenen Rohling (25) aufweisend, wobei der Halter (26) bzw. die Haltelemente im Bereich der Durchgangsöffnung (11) durch die Mittel zur Fixierung festgelegt ist bzw. sind.

13. Rohlingsanordnung nach Anspruch 12, **dadurch gekennzeichnet, dass** der Rohling (25) durch einen freien Rand des Halters (26) umgeben ist.

14. Rohlingsanordnung nach einem der Ansprüche 12 oder 13, **dadurch gekennzeichnet, dass** der Rohling (25) einen kubischen oder zylindrischen Körper aufweist.
